# NEUE EUROPÄISCHE PATENTSCHRIFT

(11) **EP 1 900 657 B2**
(45) Veröffentlichungstag und Bekanntmachung des Hinweises auf die Entscheidung über den Einspruch: **25.07.2012**
(45) Hinweis auf die Patenterteilung: 26.08.2009
(21) Anmeldenummer: 07113213.8
(22) Anmeldetag: 26.07.2007
(51) Int. Cl.: B65G 43/08, B64F 1/00

(54) **Verfahren zum Betrieb einer Fluggepäckförderanlage**
Method for operating an air baggage conveyor facility
Procédé destiné au fonctionnement d'une Installation de transport de bagages pour avion

(30) Priorität: 12.09.2006 DE 102006042733
(43) Veröffentlichungstag der Anmeldung: 19.03.2008
(73) Patentinhaber: SIEMENS AKTIENGESELLSCHAFT, 80333 München (DE)
(72) Erfinder: König, Frank, 45289 Essen (DE)

(56) Entgegenhaltungen:
- EP-A- 1 103 499
- EP-A- 1 498 349
- WO-A-02/26598
- WO-A1-03//042078
- WO-A1-2006//014103
- DE-A1- 10 011 466
- DE-A1- 10 147 531
- DE-A1- 19 820 667
- US-A- 4 227 607
- US-A1- 2004 134 751
- US-B1- 6 311 822

## Beschreibung

Die Erfindung betrifft ein Verfahren zum Betrieb einer Fluggepäckfördereranlage mit zur Aufnahme und zum Transport von Gepäckstücken vorgesehenen Behältern, die aufeinander folgend auf einzeln steuerbaren Förderabschnitten von Behälterbahnen durch die Anlage bewegbar sind, wobei die Fluggepäckförderanlage eine Speicher Programmierbare Steuerung aufweist und Initiatoren vorgesehen sind, mit denen die Behälter erfassbar und über die ein Haltesignal zum Anhalten und/oder ein Startsignal zum Starten der Behälter an einem festgelegten Haltepunkt in der Anlage initiierbar ist.

In Fluggepäckförderanlagen werden zum Befördern des Reisegepäcks innerhalb des Flughafens Behälter (Gepäckaufnahmeschalen oder sog. Trays) eingesetzt. Diese Behälter nehmen unterschiedlichstes Fluggepäck sicher und geschützt auf. Die erforderlichen und festgelegten Abläufe innerhalb der Fluggepäckförderanlage verlangen, dass ein Anhalten der Behälter an unterschiedlichsten Haltepunkten reproduzierbar möglich ist. Das Anhalten der Behälter kann beispielsweise erforderlich sein, vor Einrichtungen zum Kippen der Behälter bzw. zum Entladen der Behälter vom Fluggepäck, aber auch vor Vertikalförderern zum Anheben der Behälter auf andere Transportebenen. In jedem Fall ist ein sehr genaues Positionieren der Behälter Voraussetzung für die störungsfreie Übergabe an die nachfolgende Fördereinheit.

Gegenwärtig wird die korrekte Positionierung der Behälter mit Hilfe von Lichtschranken gewährleistet. Von diesen Lichtschranken wird beim Erkennen eines Behälters, kurz vor Erreichen des vorgesehenen Haltepunktes, ein Signal an die Speicher Programmierbare Steuerung (SPS) gesendet, um das Anhalten des Behälters einzuleiten. Es hat sich aber dabei als nachteilig herausgestellt, dass die Reaktionszeit (Zykluszeit), d. h. die zeit, die vergeht, bis das an die SPS gesendete Haltesignal ausgeführt wird, häufig variiert, so dass die Behälter den gewünschten Haltepunkt verfehlen.

Es ist dabei nicht nur möglich, dass sie den anvisierten Haltepunkt überfahren, sondern sie können auch bei zu schneller Übertragung des Signals an die SPS vor dem Haltepunkt zum Stehen kommen. Da die tatsächliche Übertragungsgeschwindigkeit des Signals an die SPS nicht vorhersehbar bzw. planbar ist, sind beide Varianten, die auf die sog. Zykluszeitentoleranz zurückzuführen sind, im Ergebnis unbefriedigend. Im ungünstigsten Fall kann es zu Überlagerungen auf den Taktbändern kommen, die einen störungsfreien Betrieb der Anlage ausschließen und dazu führen, dass die dem Betreiber zugesicherten Durchsatzleistungen nicht erreicht werden können. Auch kann es zu erheblichen Störungen im Bereich von Übergabestellen kommen, wo z.B. nach dem Anhalten des Behälters und positionsgenauem Ausrichten die Übernahme oder Übergabe an eine weiterführende Fördereinrichtung erfolgen soll.

In der WO 03/042078 A1 ist ein Verfahren zum Betrieb einer für Fluggepäck geeigneten Förderanlage offenbar. Hierbei wird der Betrieb eines einen Behälter transportierenden Fördermittels anhand eines Haltesignals angehalten, welches durch einen als Lichtsensor ausgebildeten lokalen Initiator, der einen geförderten und zu haltenden Behälter detektiert, ausgelöst wird.

Es ist deshalb die Aufgabe der vorliegenden Erfindung, eine preiswerte und einfach zu realisierende Lösung zu finden, die das benötigte reproduzierbare Anhalten der Behälter verzögerungsfrei und positionsgerecht in der Anlage ermöglicht, sowie ein ebenso verzögerungsfreies und reproduzierbares Starten der angehaltenen Behälter zum Weitertransport in der Anlage sicherstellt.

Zur Lösung der Aufgabe wird vorgeschlagen, dass das Haltesignal zum Anhalten des Behälters unmittelbar an ein Relais geleitet wird, über das der Antrieb des mit dem anzuhaltenden Behälter belegten Förderabsohnittes sofort ausgeschaltet wird, die Speicher Programmierbare Steuerung nach dem Zurücksetzen des Relais und Überprüfen des Behälters einen Freigabeausgang für den Behälter setzt, so dass der Behälter für den Weitertransport bereit ist, und zum Starten des angehaltenen Behälters synchron mit einem weiterführenden Fördererabschnitt der Anlage das zurückgesetzte Relais von einem Initiator aktiviert wird und ein Signal zum verzögerungsfreien Einschalten des von dem Behälter belegten Fördererabschnittes erhält. Dadurch, dass das Haltesignal nicht wie bisher an die SPS, sondern direkt an das Relais geleitet wird, das den Antrieb des Fördererabschnitts sofort abschaltet, ist ein positionsgenaues Anhalten möglich. Die Zykluszeittoleranzen bis zum Umsetzen des Haltesignals durch die SPS, die bisher zu Störungen der Anlage geführt haben, werden umgangen.

Nach einem weiteren Merkmal der Erfindung wird vorgeschlagen, dass parallel zu dem Haltesignal ein Belegsignal an die Speicher Programmierbare Steuerung (SPS) der Anlage als Meldung abgegeben wird, dass ein Behälter am Haltepunkt ansteht. Ein unschädlicher zeitlicher Versatz der Übermittlung des Haltesignals und des Belegsignals ist tolerierbar, weil der Behälter bereits angehalten hat. Das Signal an die SPS dient nicht der Positionierung des Behälters, sondern fungiert lediglich als Belegsignal, weshalb eine zeitlich versetzte Meldung unschädlich ist. Aufgabe der SPS ist es jetzt, ohne Einfluss auf den Haltepunkt, zu prüfen, beispielsweise an welchem Wartepunkt der Behälter steht und welche Schritte in der Folge einzuleiten sind.

Vorzugsweise wird innerhalb einer Zeitspanne zwischen 50 und 30 ms nach Abgabe des Haltesignals das Relais zum Anhalten des Förderabschnitts zurückgesetzt. Die Speicher Programmierbare Steuerung (SPS) setzt nach dem Zurücksetzen des Relais und Überprüfen des Behälters einen Freigabeausgang für den Behälter, so dass der Behälter für den Weitertransport bereit ist.

Soll nach dem Anhalten des Behälters dieser im richtigen Zeitpunkt (beispielsweise synchronisiert mit einem Kipper) weiterbewegt werden, so wird das zuvor zurückgesetzte Relais synchron mit einem weiterführenden Fördererabschnitt der Anlage von einem Initiator aktiviert, wobei das Relais ein Signal zum verzögerungsfreien Einschalten des von dem Behälter belegten Fördererabschnitts erhält. Das Relais kann dabei das Signal beispielsweise von einem Näherungsschalter oder einem Magnetsensor bekommen.

Der Fördererabschnitt mir dem Behälter kann somit sofort und unbeeinflusst von Zykluszeittoleranzen in Gang gesetzt werden, um den Behälter einem weiteren Förderabschnitt, z.B. einem Kipper oder einem Lift zu übergeben. Durch die Erfindung wird damit eine komplette Entkopplung des Start- und Stoppprozesses und den damit einhergehenden Zykluszeittoleranzen erreicht.

Wenn schließlich nach einem anderen Merkmal der Erfindung der Initiator an dem weiterführenden Fördererabschnitt vorgesehen ist und mit einem Sensor am Behälter kommuniziert, sowie parallel zu dem Signal an das Relais eine Vollzugsmeldung an die SPS übermittelt, ist auch beim Startprozess das Starten von den SPS gesteuerten Signalen entkoppelt.

Durch vorgenannte Vorgehensweise ist ein reproduzierbares Anhalten und Starten der Behälter innerhalb einer Gepäckförderanlage mit minimalen, d.h. tolerierbaren Abweichungen von dem für einen störungsfreien Lauf der Anlage zugrunde gelegten Haltpunkt möglich. Positionierungen des Behälters mit einer erforderlichen Genauigkeit von +/- 30 mm sind somit möglich. Diese Genauigkeit reicht aus, um z.B. einen Behälter vor einer Kippeinrichtung oder einem Lift so zu positionieren, dass der Behälter von der Kippeinrichtung oder dem Lift rastergenau übernommen werden kann. Im Ergebnis wird eine viel zuverlässigere und genauere Steuerung der Anlage erreicht, und zwar mit sehr einfachen Mitteln.

## Patentansprüche

1. Verfahren zum Betrieb einer Fluggepäckförderanlage mit zur Aufnahme und zum Transport von Gepäckstücken vorgesehenen Behältern, die aufeinander folgend auf einzeln steuerbaren Fördererabschnitten von Behälterbahnen durch die Anlage bewegbar sind, wobei die Fluggepäckförderanlage eine Speicher Programmierbare Steuerung aufweist und Initiatoren vorgesehen sind, mit denen die Behälter erfassbar sind und über die ein Haltesignal zum Anhalten und/oder ein Startsignal zum Starten der Behälter an festgelegten Haltepunkten in der Anlage initiierbar ist,
**dadurch gekennzeichnet, dass** das Haltesignal zum Anhalten des Behälters unmittelbar an ein Relais geleitet wird, über das der Antrieb des mit dem anzuhaltenden Behälter belegten Fördererabschnittes sofort ausgeschaltet wird, die Speicher Programmierbare Steuerung nach dem Zurücksetzen des Relais und Überprüfen des Behälters einen Freigabeausgang für den Behälter setzt, so dass der Behälter für den Weitertransport bereit ist, und zum Starten des angehaltenen Behälters synchron mit einem weiterführenden Fördererabschnitt der Anlage das zurückgesetzte Relais von einem Initiator aktiviert wird und ein Signal zum verzögerungsfreien Einschalten des von dem Behälter belegten Fördererabschnittes erhält.

2. Verfahren zum Betrieb einer Fluggepäckförderanlage nach Anspruch 1,
**dadurch gekennzeichnet,**
**dass** parallel zu dem Haltesignal ein Belegsignal an die Speicher Programmierbare Steuerung (SPS) der Anlage als Meldung abgegeben wird, dass ein Behälter am Haltepunkt ansteht, wobei ein unschädlicher zeitlicher Versatz der Übermittlungen des Haltesignals und des Belegsignals tolerierbar ist.

3. Verfahren zum Betrieb einer Fluggepäckförderanlage nach Anspruch 1 und 2,
**dadurch gekennzeichnet,**
**dass** innerhalb einer Zeitspanne zwischen 50 und 30 ms nach Abgabe des Haltesignals das Relais zum Anhalten des Fördererabschnittes zurückgesetzt wird.

4. Verfahren zum Betrieb einer Fluggepäckförderanlage nach Anspruch 1,
**dadurch gekennzeichnet,**
**dass** der Initiator an dem weiterführenden Fördererabschnitt vorgesehen ist,
**dass** der Initiator mit einem Sensor am Behälter kommuniziert und parallel zu dem Signal an das Relais eine Vollzugsmeldung an die SPS, übermittelt.

## Claims

1. Method for operating an aircraft baggage conveyor system having containers which are provided for holding and for transporting pieces of baggage and which can be moved successively through the system on individually controllable conveyor sections of container paths, wherein the aircraft baggage conveyor system has a stored program controller and initiators are provided with which the containers can be sensed and by means of which a stop signal for stopping and/or a start signal for starting the containers can be initiated at specified stopping points in the system, **characterized in that** the stop signal for stopping the container is fed directly to a relay by means of which the drive of the conveyor section which is occupied by the container to be stopped is switched off immediately, after the relay has been reset and the container has been checked, the stored program controller sets an enable output for the container so that the container is ready to be transported on, and in order to start the stopped container in synchronism with a conveyor section of the system which carries on, the reset relay is activated by an initiator and receives a signal for the delay-free switching on of the conveyor section which is occupied by the container.

2. Method for operating an aircraft baggage conveyor system according to Claim 1, **characterized in that**, in parallel with the stop signal, an occupation signal is output to the stored program controller (SPS) of the system as a message that a container is present at the stopping point, wherein a nondamaging timing offset between the transmission of the stop signal and that of the occupation signal is tolerable.

3. Method for operating an aircraft baggage conveyor system according to Claims 1 and 2, **characterized in that** within a time period between 50 and 30 ms after the stop signal has been output, the relay is reset in order to stop the conveyor section.

4. Method for operating an aircraft baggage conveyor system according to Claim 1, **characterized in that** the initiator is provided on the conveyor section which carries on, and **in that** the initiator communicates with a sensor on the container and transmits a completion message to the stored program controller in parallel with the signal to the relay.

## Revendications

1. Procédé pour faire fonctionner une installation de transport de bagages pour avion, ayant des récipients prévus pour la réception et le transport de pièces de bagage qui, en se suivant sur des tronçons de convoyeur pouvant être commandés individuellement de voies de récipient, peuvent être déplacés dans l'installation, l'installation de transport de bagages pour avion ayant un automate programmable à mémoire et des initiateurs étant prévus, par lesquels les récipients peuvent être détectés et par lesquels un signal d'arrêt pour l'arrêt et/ou un signal de démarrage pour le démarrage des récipients peut être initié dans l'installation en des points d'arrêt fixés,
**caractérisé**
**en ce que** le signal d'arrêt pour arrêter le récipient est envoyé directement à un relais par lequel l'entraînement du tronçon de convoyeur occupé par le récipient à arrêter est mis hors circuit immédiatement, l'automate programmable à mémoire établit, après la remise du relais à l'état initial et le contrôle du récipient, une sortie de libération du récipient de manière à ce que le récipient soit prêt à être transporté plus loin et de manière à activer par un initiateur, pour le démarrage du récipient arrêté, en synchronisme avec un tronçon de convoyage menant plus loin de l'installation, le relais remis à l'état initial et de manière à obtenir un signal pour l'enclenchement sans retard du tronçon de convoyeur occupé par le récipient.

2. Procédé pour faire fonctionner une installation de transport de bagages pour avion suivant la revendication 1,
**caractérisé**
**en ce que**, parallèlement au signal d'arrêt, on émet, en tant que message, un signal d'occupation vers l'automate ( SPS ) programmable de l'installation, selon lequel un récipient est proche du point d'arrêt, un décalage dans le temps non dommageable des transmissions du signal d'arrêt et du signal d'occupation pouvant être toléré.

3. Procédé pour faire fonctionner une installation de transport de bagages pour avion suivant les revendications 1 et 2,
**caractérisé**
**en ce que**, dans un laps de temps compris entre 50 et 30 ms après émission du signal d'arrêt, le relais est remis à l'état initial pour l'arrêt du tronçon de convoyeur.

4. Procédé pour faire fonctionner une installation de transport de bagages pour avion suivant la revendication 1,
**caractérisé**
**en ce que** l'initiateur est prévu sur le tronçon de convoyeur menant plus loin,
**en ce que** l'initiateur communique avec un capteur sur le récipient et transmet parallèlement au signal sur le relais un message d'exécution au SPS.
